# EUROPÄISCHE PATENTSCHRIFT

(11) **EP 3 672 851 B1**
(45) Veröffentlichungstag und Bekanntmachung des Hinweises auf die Patenterteilung: **13.09.2023**
(21) Anmeldenummer: 18743478.2
(22) Anmeldetag: 19.07.2018
(51) Int. Cl.: B60T 8/40

(54) **VERFAHREN ZUR VERMEIDUNG EINER ÜBERSCHREITUNG EINES ZULÄSSIGEN HÖCHSTDRUCKS EINER HYDRAULISCHEN FREMDKRAFT-FAHRZEUGBREMSANLAGE MIT SCHLUPFREGELUNG**
METHOD FOR PREVENTING AN EXCEEDANCE OF A PERMISSIBLE MAXIMUM PRESSURE OF A HYDRAULIC EXTERNALLY POWERED VEHICLE BRAKING SYSTEM WITH SLIP CONTROL
PROCÉDÉ POUR ÉVITER UN DÉPASSEMENT D'UNE PRESSION MAXIMALE ADMISSIBLE D'UN SYSTÈME DE FREINAGE DE VÉHICULE HYDRAULIQUE À RÉGULATION ANTIPATINAGE ACTIONNÉ PAR UNE FORCE EXTÉRIEURE

(30) Priorität: 24.08.2017 DE 102017214858
(43) Veröffentlichungstag der Anmeldung: 01.07.2020
(73) Patentinhaber: Robert Bosch GmbH, 70442 Stuttgart (DE)
(72) Erfinder: KRAUTTER, Andreas, 71711 Steinheim (DE); FOERCH, Dirk, 74196 Neuenstadt/Stein (DE); FOITZIK, Bertram, 74360 Ilsfeld (DE); BUNK, Michael, 74211 Leingarten (DE); FRANK, Daniel, 74343 Kleinsachsenheim (DE)
(86) Internationale Anmeldenummer: PCT/EP2018/069625
(87) Internationale Veröffentlichungsnummer: WO 2019/037966

(56) Entgegenhaltungen:
- WO-A1-2013/131806
- DE-A1- 3 742 172
- DE-A1- 4 340 467
- DE-A1- 19 548 207
- DE-A1-102015 201 331

## Beschreibung

Die Erfindung betrifft ein Verfahren zur Vermeidung einer Überschreitung eines zulässigen Höchstdrucks einer hydraulischen Fremdkraft-Fahrzeugbremsanlage mit Schlupfregelung mit den Merkmalen des Oberbegriffs des Anspruchs 1. Es soll ein Bremsdruck in der Fahrzeugbremsanlage vermieden werden, der die Fahrzeugbremsanlage oder Teile der Fahrzeugbremsanlage beschädigen oder zerstören kann. Es soll auch eine mechanische Überlastung, Beschädigung oder Zerstörung der Fahrzeugbremsanlage oder von Teilen der Fahrzeugbremsanlage, beispielsweise eines Fremdkraftdruckerzeugers vermieden werden.

### Stand der Technik

Die Offenlegungsschrift DE 10 2015 201 331 A1 offenbart ein Verfahren zu einer Begrenzung eines Bremsdrucks in einer hydraulischen Fremdkraft-Fahrzeugbremsanlage mit Schlupfregelung. Die Fahrzeugbremsanlage weist eine Kolben-Zylinder-Einheit, die mit einem Elektromotor über einen Gewindetrieb antreibbar ist, als Fremdkraftdruckerzeuger auf, an den hydraulische Radbremsen über Magnetventile als Einlassventile angeschlossen sind. Über Magnetventile als Auslassventile sind die Radbremsen an einen drucklosen Bremsflüssigkeitsvorratsbehälter der Fahrzeugbremsanlage angeschlossen, an den auch ein muskelkraftbetätigbarer Hauptbremszylinder angeschlossen ist, der bei einer Fremdkraftbremsung als Sollwertgeber dient und der bei einer Fremdkraftbremsung durch Schließen eines Trennventils in jedem Bremskreis hydraulisch von der Fahrzeugbremsanlage getrennt wird. Eine Kolben-Zylinder-Einheit mit einem federbeaufschlagten Kolben dient als Pedalwegsimulator, in den der Hauptbremszylinder bei einer Fremdkraftbremsung Bremsflüssigkeit verdrängen kann. Zu einer Hilfsbremsung bei Ausfall des Fremdkraftdruckerzeugers oder einer sonstigen Störung kann die Fahrzeugbremsanlage mit dem Hauptbremszylinder betätigt werden.

Zur Vermeidung einer Überschreitung eines zulässigen Höchstdrucks in der Fahrzeugbremsanlage bei einer Bremsdruckerzeugung mit dem Fremdkraftdruckerzeuger für eine Fremdkraftbremsung schlägt die genannte Offenlegungsschrift vor, den Elektromotor des Fremdkraftdruckerzeugers auszuschalten, das Auslassventil einer Radbremse zumindest zeitweise zu öffnen und ihr Einlassventil offen zu halten und die Einlassventile der übrigen Radbremsen zu schließen. Dadurch strömt Bremsflüssigkeit aus der Fahrzeugbremsanlage durch das offene Einlassventil und das offene Auslassventil einer Radbremse in den drucklosen Bremsflüssigkeitsvorratsbehälter. Das vermeidet oder verringert zumindest einen Druckanstieg in der Fahrzeugbremsanlage durch einen Nachlauf des ausgeschalteten Fremdkraftdruckerzeugers. Nachlauf bedeutet eine Weiterbewegung des Elektromotors, Gewindetriebs und Kolbens aufgrund der kinetischen Energie ihrer bewegten Massen nach Abschalten einer Bestrohmung des Elektromotors. Das bekannte Verfahren verstößt gegen den Grundsatz, nie das Einlassventil und das Auslassventil einer Radbremse gleichzeitig zu öffnen, sondern immer zumindest das Einlassventil oder das Auslassventil zu schließen bzw. geschlossen zu halten.

### Offenbarung der Erfindung

Das erfindungsgemäße Verfahren mit den Merkmalen des Anspruchs 1 ist zu einer Vermeidung einer Überschreitung eines zulässigen Höchstdrucks einer hydraulischen Fremdkraft-Fahrzeugbremsanlage vorgesehen, die eine Schlupfregelung aufweist. Das erfindungsgemäße Verfahren schützt die Fahrzeugbremsanlage vor einer Beschädigung oder Zerstörung durch einen Bremsdruck, den ein Fremdkraftdruckerzeuger erzeugt, indem sie den Bremsdruck begrenzt und/oder seinen Anstieg bremst oder begrenzt.

Die hydraulische Fremdkraft-Fahrzeugbremsanlage weist einen Fremdkraftdruckerzeuger auf, an den über Einlassventile hydraulische Radbremsen angeschlossen sind. Der Fremdkraftdruckerzeuger weist insbesondere einen Elektromotor, einen Gewindetrieb und eine Kolben-Zylinder-Einheit auf, die über den Gewindetrieb mit dem Elektromotor antreibbar ist, das heißt deren Kolben im Zylinder verschiebbar ist. Über Auslassventile sind die Radbremsen an einen Bremsflüssigkeitsvorratsbehälter angeschlossen. Die Einlassventile und die Auslassventile sind insbesondere Magnetventile und die Einlassventile und vorzugsweise auch die Auslassventile sind Stetigventile. Stetigventil bedeutet, dass die Ventile nicht nur die Stellungen "offen" und "geschlossen" aufweisen, sondern außer "offen" und "geschlossen" jede teilweise geöffnete bzw. geschlossene Stellung dazwischen ermöglichen. Ein teilweise offenes bzw. geschlossenes Stetigventil kann als steuerbare Drossel aufgefasst werden, deren Durchflusswiderstand steuerbar ist.

Der Bremsflüssigkeitsvorratsbehälter ist vorzugsweise drucklos, es ist insbesondere ein Bremsflüssigkeitsvorratsbehälter eines muskel- oder hilfskraftbetätigbaren Hauptbremszylinders. Hilfskraft bedeutet eine Betätigung mit durch einen Bremskraftverstärker verstärkter Muskelkraft. Sie ist von einer Hilfsbremsung durch Betätigung des Hauptbremszylinders bei Ausfall des Fremdkraftdruckerzeugers oder einer sonstigen Störung der Fahrzeugbremsanlage zu unterscheiden.

Die Einlassventile und Auslassventile der Radbremsen sind Teil einer Schlupfregelung der Fahrzeugbremsanlage, mit ihnen lassen sich Radbremsdrücke in jeder Radbremse einzeln regeln, wobei unter einer Regelung auch eine Steuerung verstanden werden soll. Mit den Einlassventilen und den Auslassventilen ist auch eine Radbremsdruckregelung insbesondere bei einer Fremdkraftbremsung ohne und mit Schlupfregelung möglich. Radbremsdruckregelung bedeutet, dass Radbremsdrücke in den Radbremsen entsprechend einem Sollwert geregelt werden. Eine Radbremsdruckregelung ist bei einer Fremdkraftbremsung auch mit dem Fremdkraftdruckerzeuger möglich.

Zur Vermeidung einer Überschreitung des zulässigen Höchstdrucks bei einer Bremsdruckerzeugung für eine Fremdkraftbremsung mit dem Fremdkraftdruckerzeuger sieht die Erfindung vor, ein Einlassventil einer Radbremse teilweise zu schließen, deren Auslassventil geöffnet wird oder beispielsweise wegen einer Schlupfregelung oder einer Radbremsdruckregelung bereits geöffnet ist. Das Einlassventil wird teilweise geschlossen, wenn es zuvor geöffnet war. War es zuvor geschlossen, wird es teilweise geöffnet, was zum gleichen Ergebnis eines teilweise geschlossenen bzw. teilweise geöffneten Einlassventils führt. Es können auch mehrere oder alle Einlassventile teilweise geöffnet werden. Weil normalerweise der Bremsdruck in der Fahrzeugbremsanlage nicht abgesenkt werden soll, wird vorzugsweise nur ein Einlassventil teilweise geöffnet bzw. teilweise geschlossen.

Durch das teilweise Schließen des Einlassventils einer Radbremse, dessen Auslassventil geöffnet wird oder offen ist, lässt sich ein Bremsdruckanstieg in der Fahrzeugbremsanlage bremsen und/oder der Bremsdruck in der Fahrzeugbremsanlage begrenzen. Zugleich lässt sich ein Bremsdruckabfall oder ein Bremsdruckabfall unter einen gewollten Bremsdruck vermeiden, indem das Einlassventil so weit geschlossen bzw. nur so weit geöffnet wird, dass der mit dem Fremdkraftdruckerzeuger erzeugte Bremsdruck in der Fahrzeugbremsanlage nicht oder nicht unter einen gewollten Bremsdruck sinkt. Der Fremdkraftdruckerzeuger wird vorzugsweise abgeschaltet. Ein weiterer Bremsdruckanstieg durch einen Nachlauf des Fremdkraftdruckerzeugers wird durch das erfindungsgemäße Verfahren gebremst oder verhindert.

Beim erfindungsgemäßen Verfahren ist das Einlassventil einer Radbremse, dessen Auslassventil geöffnet wird oder offen ist, zwar nicht ganz aber doch teilweise geschlossen.

Die Unteransprüche haben vorteilhafte Ausgestaltungen und Weiterbildungen der im Anspruch 1 angegebenen Erfindung zum Gegenstand.

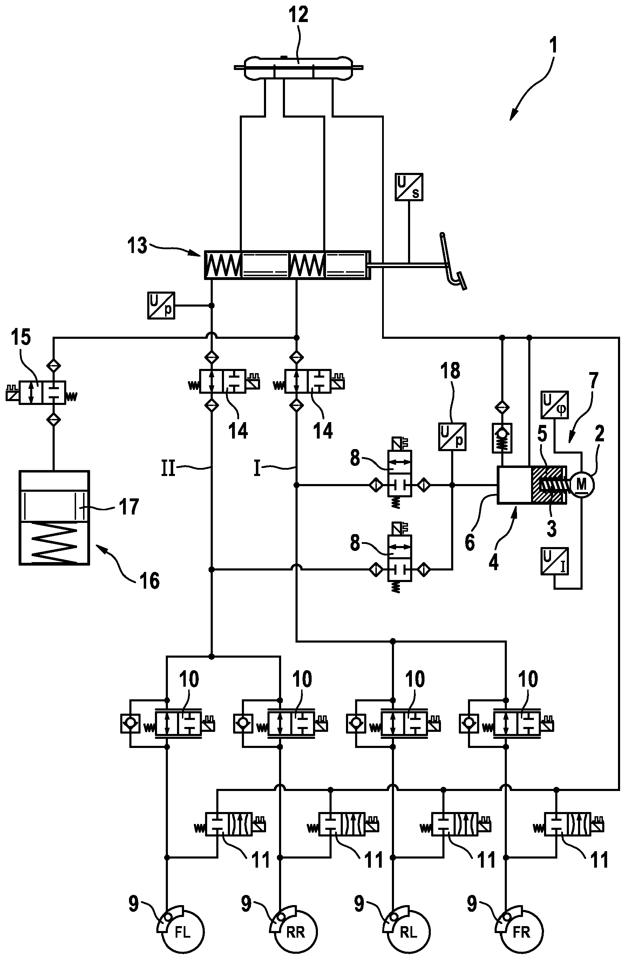

### Kurze Beschreibung der Zeichnung

Das erfindungsgemäße Verfahren wird nachfolgend anhand eines in der Zeichnung dargestellten hydraulischen Schaltplans einer eine Schlupfregelung aufweisenden hydraulischen Fremdkraft-Fahrzeugbremsanlage erläutert.

### Ausführungsform der Erfindung

Die Zeichnung zeigt eine hydraulische Fremdkraft-Fahrzeugbremsanlage 1 mit Schlupfregelung. Sie weist einen Elektromotor 2, einen Gewindetrieb 3, und eine Kolben-Zylinder-Einheit 4, deren Kolben 5 mit dem Elektromotor 2 über den Gewindetrieb 3 in einem Zylinder 6 verschiebbar ist, als Fremdkraftdruckerzeuger 7 auf. Bei einer Betriebsbremsung, die als Fremdkraftbremsung durchgeführt wird, erzeugt der Fremdkraftdruckerzeuger 7 einen Bremsdruck. Der Zylinder 6 des Fremdkraftdruckerzeugers 7 ist über Fremdkraftbremsventile 8 an die Fahrzeugbremsanlage 1 angeschlossen. Für jeden Bremskreis I, II ist ein Fremdkraftbremsventil 8 vorgesehen, die gezeichnete Fahrzeugbremsanlage 1 weist zwei hydraulisch voneinander getrennte Bremskreise I, II auf.

Die Fahrzeugbremsanlage 1 weist vier hydraulische Radbremsen 9 auf, die über je ein Einlassventil 10 an die Fremdkraftbremsventile 8 und über je ein Auslassventil 11 an einen Bremsflüssigkeitsvorratsbehälter 12 angeschlossen sind. In der Zeichnung ist der Bremsflüssigkeitsvorratsbehälter 12 drucklos. Jeweils zwei Radbremsen 9 sind einem Bremskreis I, II zugeordnet. Mit den Einlassventilen 10 und den Auslassventilen 11 ist in jeder Radbremse 9 ein Radbremsdruck einzeln regelbar. Eine Radbremsdruckregelung erfolgt sowohl bei einer Fremdkraftbremsung ohne Schlupfregelung als auch bei einer Schlupfregelung. Die Einlassventile 10 und die Auslassventile 11 bilden eine Radbremsdruckregelungventilanordnung und können als Schlupfregelung oder Teil einer Schlupfregelung aufgefasst werden. Eine Radbremsdruckregelung ohne Schlupfregelung bedeutet eine Regelung der Radbremsdrücke in den Radbremsen 9 entsprechend einem Sollwert. Schlupfregelungen sind beispielsweise eine Blockierschutz-, Antriebsschlupf-, Fahrdynamikregelung und elektronisches Stabilitätsprogramm, für die die Abkürzungen ABS, ASR, FDR und ESP gebräuchlich sind. Solche Schlupfregelungen sind bekannt und werden hier nicht weiter erläutert. Die Anzahl von zwei Bremskreisen I, II und vier Radbremsen 9 ist ebenso wenig zwingend für die Erfindung wie die Zuordnung von von zwei Radbremsen 9 zu jedem Bremskreis I, II. Es können eine, zwei oder mehr Radbremsen 9 in jedem Bremskreis I, II vorhanden sein und/oder die Fahrzeugbremsanlage 1 kann einen, zwei oder mehr Bremskreise I, II aufweisen.

Die Fahrzeugbremsanlage 1 weist einen muskelkraftbetätigbaren Zweikreis-Hauptbremszylinder 13 auf, der über jeweils ein Trennventil 14 zwischen den Fremdkraftbremsventilen 8 und den Einlassventilen 10 an die beiden Bremskreise I, II der Fahrzeugbremsanlage 1 angeschlossen ist. Bei einer Betriebsbremsung, die wie gesagt als Fremdkraftbremsung ausgeführt wird, für die der Fremdkraftdruckerzeuger 7 einen Bremsdruck erzeugt wird, der Hauptbremszylinder 13 durch Schließen der Trennventile 4 hydraulisch von der Fahrzeugbremsanlage 1 getrennt und dient als Sollwertgeber für die mit den Einlassventilen 10 und den Auslassventilen 11 und/oder mit dem Fremdkraftdruckerzeuger 7 zu regelnden Radbremsdrücke in den Radbremsen 9.

Bei einem Ausfall des Fremdkraftdruckerzeugers 7 oder einer anderen Störung der Fahrzeugbremsanlage 1 bleiben die Trennventile 14 geöffnet und die Fahrzeugbremsanlage 1 wird zu einer sogenannten Hilfsbremsung mit dem Hauptbremszylinder 1 betätigt.

An eine Kammer des Hauptbremszylinders 13 ist durch ein Simulatorventil 15 ein Pedalwegsimulator 16 angeschlossen. Der Pedalwegsimulator 16 weist eine Kolben-Zylinder-Einheit mit einem federbeaufschlagten Kolben 17 auf und ermöglicht einen Kolbenweg und einen Pedalweg am Hauptbremszylinder 13, wenn dieser bei einer Betriebsbremsung durch Schließen der Trennventile 14 hydraulisch von der Fahrzeugbremsanlage 1 getrennt wird.

Die Einlassventile 10 sind 2/2-Stetig-Magnetventile und die übrigen Ventile 8, 11, 14, 15 2/2-Schalt-Magnetventile, wobei die Einlassventile 10 und die Trennventile 14 in ihren stromlosen Grundstellungen offen und die Fremdkraftbremsventile 8, die Auslassventile 11 und das Simulatorventil 15 in ihren stromlosen Grundstellungen geschlossen sind. Andere Ausführungen schließt die Erfindung nicht aus. Stetigventile bedeutet, dass die Einlassventile 10 nicht nur eine offene- und eine geschlossene Stellung aufweisen, sondern außer der offenen- und der geschlossenen Stellung jede Zwischenstellung zwischen der offenen- und der geschlossenen Stellung möglich ist. Die Schaltventile 8, 11, 14, 15 weisen nur eine offene und eine geschlossene Stellung ohne Zwischenstellungen auf.

Um bei einer Fremdkraftbetätigung, bei der ein Bremsdruck mit dem Fremdkraftdruckerzeuger 7 erzeugt wird, einen unzulässig hohen Bremsdruck in der Fahrzeugbremsanlage 1 zu vermeiden, sieht die Erfindung vor, das Einlassventil 10 einer Radbremse 9 teilweise zu schließen, so dass es als Drossel wirkt, und das Auslassventil 11 derselben Radbremse 9 zu öffnen. Weil die Radbremse 9 über das Auslassventil 11 an den drucklosen Bremsflüssigkeitsvorratsbehälter 12 angeschlossen ist, kann mit dem als Stetigventil ausgeführten Einlassventil 10 der Bremsdruck in der Fahrzeugbremsanlage 1 bzw. im jeweiligen Bremskreis I, II geregelt und begrenzt werden. Insbesondere kann ein Nachlauf des Elektromotors 2 des Fremdkraftdruckerzeugers 7 wegen seiner Schwungmasse mit dem Einlassventil 10 ausgeglichen werden, so dass der Bremsdruck in der Fahrzeugbremsanlage 1 nicht durch den Nachlauf des Elektromotors 2 ungewollt weiter ansteigt.

Der Nachlauf des Elektromotors 2 ist dessen Weiterdrehung nach Abschalten seiner Bestrohmung durch einen Schwung seiner bewegten Massen. Weitere bewegte Massen des Fremdkraftdruckerzeugers 7 können zum Nachlauf beitragen. Vorzugsweise wird die Bestrohmung des Elektromotors 2 des Fremdkraftdruckerzeugers 7 nicht nur abgeschaltet, sondern der Elektromotor 2 wird bis zum Stillstand mit einem Bremsstrom beaufschlagt, das heißt er wird so bestromt, dass er ein seiner Drehung entgegengerichtetes Bremsmoment erzeugt, um ihn, den Gewindetrieb 3 und den Kolben 5 der Kolben-Zylinder-Einheit 4 des Fremdkraftdruckerzeugers 7 möglichst schnell zum Stillstand zu bringen und den Nachlauf kurz zu halten.

Vorzugsweise wird in jedem Bremskreis I, II ein Einlassventil 10 teilweise geschlossen und das zugeordnete Auslassventil 11 geöffnet. Die Fremdkraftbremsventile 8 bleiben vorzugsweise offen, weil sonst ein Nachlauf des Fremkraftdruckerzeuers 7 einen ungewünschten, sehr starken Druckanstieg im Fremdkraftdruckerzeuger 7 bewirken würde.

Eine Öffnungsweite des Einlassventils 10, das als steuerbare Drossel wirkt und dessen zugeordnetes Auslassventil 11 zur Begrenzung des Bremsdrucks in der Fahrzeugbremsanlage 1 geöffnet wird, wird vorzugsweise in Abhängigkeit von einer Druckdifferenz zwischen einem Bremsdruck in der Fahrzeugbremsanlage 1 zwischen den Einlassventilen 10, dem Fremdkraftdruckerzeuger 7 und dem Hauptbremszylinder 13 einerseits und einem Radbremsdruck in der Radbremse 9, die an das Einlassventil 10 angeschlossen ist, das teilweise geschlossen wird, andererseits, eingestellt. Der Bremsdruck zwischen den Einlassventilen 10, dem Fremdkraftdruckerzeuger 7 und dem Hauptbremszylinder 13 kann mit nicht gezeichneten Drucksensoren in den Bremskreisen I, II gemessen. In der beschriebenen Ausführungsform der Erfindung wird ein Druck im Zylinder 6 der Kolben-Zylinder-Einheit 4 des Fremdkraftdruckerzeugers 7 mit einem Drucksensor 18 gemessen.

Ein Radbremsdruck oder Radbremsdrücke können mit nicht gezeichneten, an die Radbremsen 9 angeschlossenen Drucksensoren gemessen werden. Es ist allerdings auch möglich, den Radbremsdruck anhand des Drucks bzw. einer Druckänderung in den Bremskreisen I, II oder im Zylinder 6 der Kolben-Zylinder-Einheit 4 des Fremdkraftdruckerzeugers 7. der mit dem Drucksensor 18 gemessen wird, zu berechnen oder in anderer Weise zu ermitteln, beispielsweise anhand eines Kennfelds. Wegen der hohen Dynamik des Radbremsdrucks ist für die Messung ein zeitlich hochauflösender Drucksensor erforderlich. Eine Berechnung oder andere Ermittlung des Radbremsdrucks kann deswegen von Vorteil sein. Eine Berechnung oder Ermittlung beispielsweise anhand eines Kennfelds ist möglich, weil das dynamische Druckverhalten der Fahrzeugbremsanlage 1 bekannt und berechenbar oder in Versuchen ermittelbar und in einem Kennfeld speicherbar ist.

Das Einlassventil 10, das zur Vermeidung eines unzulässig hohen Drucks in der Radbremse 1 teilweise geschlossen wird, wird insbesondere so weit geschlossen, dass in der Fahrzeugbremsanlage 1 bzw. in den Bremskreisen I, II ein Bremsdruck durch den Nachlauf des Fremdkraftdruckerzeugers 7 erreicht oder gehalten wird, der mindestens so hoch ist wie ein höchster Soll-Radbremsdruck in den Radbremsen 9. Das Einlassventil 10 wird insbesondere mit dem nach Abschalten langsamer werdenden und zum Stillstand kommenden Fremdkraftdruckerzeuger 7 oder einer abnehmenden Geschwindigkeit des Bremsdruckanstiegs weiter geschlossen. Steht der Fremdkraftdruckerzeuger 7 still und steigt der Bremsdruck nicht weiter an, kann das Einlassventil 10 ganz geschlossen werden und wird vorzugsweise das zugeordnete Auslassventil 11 wieder geschlossen und das Einlassventil 10 geöffnet.

## Patentansprüche

1. Verfahren zur Vermeidung einer Überschreitung eines zulässigen Höchstdrucks einer hydraulischen Fremdkraft-Fahrzeugbremsanlage mit Schlupfregelung, wobei die Fahrzeugbremsanlage (1) einen Fremdkraftdruckerzeuger (7) aufweist, an den mehrere hydraulische Radbremsen (9) über Einlassventile (10) angeschlossen sind, die über Auslassventile (11) an einen Bremsflüssigkeitsvorratsbehälter (12) angeschlossen sind, wobei zu einer Fremdkraftbremsung und/oder zu einer Schlupfregelung ein Bremsdruck in der Fahrzeugbremsanlage (1) mit dem Fremdkraftdruckerzeuger (7) erzeugt wird und zu einer Radbremsdruckregelung ein Auslassventil (11) einer Radbremse (9) geöffnet wird, **dadurch gekennzeichnet, dass** die Einlassventile (10) Stetigventile sind und dass das Einlassventil (10) einer Radbremse (9), deren Auslassventil (11) geöffnet ist oder wird, teilweise geschlossen bzw. teilweise geöffnet wird.

2. Verfahren nach Anspruch 1, **dadurch gekennzeichnet, dass** der Fremdkraftdruckerzeuger (7) bis zum Stillstand abgebremst wird.

3. Verfahren nach Anspruch 1, **dadurch gekennzeichnet, dass** eine Öffnungsweite des teilweise geöffneten bzw. teilweise geschlossenen Einlassventils (10) von einer Druckdifferenz eines Bremsdrucks in der Fahrzeugbremsanlage (1) und einem Radbremsdruck in der an das teilweise geöffnete bzw. teilweise geschlossen Einlassventil (10) angeschlossenen Radbremse (9) abhängig ist.

4. Verfahren nach Anspruch 3, **dadurch gekennzeichnet, dass** der Radbremsdruck in der Radbremse (9) nicht gemessen, sondern berechnet oder in anderer Weise ermittelt wird.

5. Verfahren nach Anspruch 1, **dadurch gekennzeichnet, dass** das Einlassventil (10) der Radbremse (9), deren Auslassventil (11) geöffnet ist oder wird, so weit geschlossen wird, dass in der Fahrzeugbremsanlage (1) ein Bremsdruck erreicht und/oder gehalten wird, der mindestens so hoch wie ein höchster Soll-Radbremsdruck aller Radbremsen (9) ist.

6. Verfahren nach Anspruch 1, **dadurch gekennzeichnet, dass** das Einlassventil (10) der Radbremse (9), deren Auslassventil (11) geöffnet ist oder wird, so weit geöffnet bleibt oder wird, dass ein Maximaldruck in der Fahrzeugbremsanlage (1) nicht überschritten wird.

7. Verfahren nach Anspruch 5, **dadurch gekennzeichnet, dass** ein Nachlauf des Fremdkraftdruckerzeugers (7) beim teilweisen Schließen bzw. Öffnen des Einlassventils (10) der Radbremse (9), deren Auslassventil (11) geöffnet ist oder wird, berücksichtigt wird.

8. Verfahren nach Anspruch 1, **dadurch gekennzeichnet, dass** der Fremdkraftdruckerzeuger (7) einen Elektromotor (2), einen Gewindetrieb (3) und eine Kolben-Zylinder-Einheit (4) aufweist, die über den Gewindetrieb (3) mit dem Elektromotor (2) antreibbar ist.

## Claims

1. Method for avoiding a permissible maximum pressure being exceeded in a hydraulic power vehicle braking system with slip control, wherein the vehicle braking system (1) has a power pressure generator (7) to which a plurality of hydraulic wheel brakes (9) are connected via inlet valves (10), which are connected via outlet valves (11) to a brake fluid storage container (12), wherein, for power braking and/or for slip control, a brake pressure in the vehicle braking system (1) is generated with the power pressure generator (7), and for wheel brake pressure control, an outlet valve (11) of a wheel brake (9) is opened, **characterized in that** the inlet valves (10) are continuous valves, and **in that** the inlet valve (10) of a wheel brake (9) of which the outlet valve (11) is open or opened is partly closed or partly opened.

2. Method according to Claim 1, **characterized in that** the power pressure generator (7) is braked down to a standstill.

3. Method according to Claim 1, **characterized in that** an opening width of the partly opened or partly closed inlet valve (10) depends on a pressure difference of a brake pressure in the vehicle braking system (1) and a wheel brake pressure in the wheel brake (9) that is connected to the partly opened or partly closed inlet valve (10).

4. Method according to Claim 3, **characterized in that** the wheel brake pressure in the wheel brake (9) is not measured but calculated or determined in another way.

5. Method according to Claim 1, **characterized in that** the inlet valve (10) of the wheel brake (9) of which the outlet valve (11) is open or opened is closed to such an extent that a brake pressure in the vehicle braking system (1) which is at least as high as a maximum target wheel brake pressure of all the wheel brakes (9) is achieved and/or maintained.

6. Method according to Claim 1, **characterized in that** the inlet valve (10) of the wheel brake (9) of which the outlet valve (11) is open or opened remains open or is opened to such an extent that a maximum pressure in the vehicle braking system (1) is not exceeded.

7. Method according to Claim 5, **characterized in that** an overrun of the power pressure generator (7) is taken into account when partly closing or opening the inlet valve (10) of the wheel brake (9) of which the outlet valve (11) is open or opened.

8. Method according to Claim 1, **characterized in that** the power pressure generator (7) has an electric motor (2), a threaded drive (3) and a piston-cylinder unit (4), which can be driven by the electric motor (2) via the threaded drive (3).

## Revendications

1. Procédé pour éviter un dépassement d'une pression maximale admissible d'un système de freinage hydraulique de véhicule à force extérieure avec régulation du glissement, le système de freinage de véhicule (1) présentant un générateur de pression de force extérieure (7) auquel sont raccordés plusieurs freins de roue hydrauliques (9) par l'intermédiaire de soupapes d'admission (10) qui sont raccordées par l'intermédiaire de soupapes d'échappement (11) à un réservoir de liquide de frein (12) ; pour un freinage par force extérieure et/ou pour une régulation du glissement, une pression de freinage étant générée dans le système de freinage de véhicule (1) avec le générateur de pression de force extérieure (7) et, pour une régulation de la pression de freinage de roue, une soupape d'échappement (11) d'un frein de roue (9) étant ouverte, **caractérisé en ce que** les soupapes d'admission (10) sont des soupapes continues et **en ce que** la soupape d'admission (10) d'un frein de roue (9), dont la soupape d'échappement (11) est ouverte ou en cours d'ouverture ou est partiellement fermée ou partiellement ouverte.

2. Procédé selon la revendication 1, **caractérisé en ce que** le générateur de pression de force extérieure (7) est freiné jusqu'à l'arrêt.

3. Procédé selon la revendication 1, **caractérisé en ce qu'**une largeur d'ouverture de la soupape d'admission (10) partiellement ouverte ou partiellement fermée dépend d'une différence de pression entre une pression de freinage dans le système de freinage de véhicule (1) et une pression de freinage de la roue dans le frein de roue (9) raccordé à la soupape d'admission (10) partiellement ouverte ou partiellement fermée.

4. Procédé selon la revendication 3, **caractérisé en ce que** la pression de frein de roue dans le frein de roue (9) n'est pas mesurée, mais calculée ou déterminée d'une autre manière.

5. Procédé selon la revendication 1, **caractérisé en ce que** la soupape d'admission (10) du frein de roue (9), dont la soupape d'échappement (11) est ouverte ou en cours d'ouverture, est fermée dans une mesure telle qu'une pression de freinage soit atteinte et/ou maintenue dans le système de freinage de véhicule (1), qui est au moins aussi élevée qu'une pression de freinage de roue de consigne la plus élevée de tous les freins de roue (9) .

6. Procédé selon la revendication 1, **caractérisé en ce que** la soupape d'admission (10) du frein de roue (9), dont la soupape d'échappement (11) est ouverte ou en cours d'ouverture, reste ouverte ou en cours d'ouverture dans une mesure telle qu'une pression maximale dans le système de freinage de véhicule (1) ne soit pas dépassée.

7. Procédé selon la revendication 5, **caractérisé en ce que** l'on tient compte d'une surcourse du générateur de pression de force extérieure (7) lors de la fermeture ou de l'ouverture partielle de la soupape d'admission (10) du frein de roue (9) dont la soupape d'échappement (11) est ouverte ou en cours d'ouverture.

8. Procédé selon la revendication 1, **caractérisé en ce que** le générateur de pression de force extérieure (7) présente un moteur électrique (2), une vis d'entraînement (3) et une unité piston-cylindre (4) qui peut être entraîné par le moteur électrique (2) par l'intermédiaire de la vis d'entraînement (3).
